(19) **Europäisches Patentamt European Patent Office Office européen des brevets**

(11) **EP 4 469 248 B1**

(12) **EUROPEAN PATENT SPECIFICATION**

(45) Date of publication and mention of the grant of the patent:
**31.12.2025 Bulletin 2026/01**

(21) Application number: **22834723.3**

(22) Date of filing: **02.12.2022**

(51) International Patent Classification (IPC):
**B25J 13/08** (2006.01)   **G01L 5/161** (2020.01)
**G01L 5/1627** (2020.01)   **G01L 5/22** (2006.01)

(52) Cooperative Patent Classification (CPC):
**B25J 13/082; B25J 13/084; B25J 13/088; G01L 1/2243; G01L 5/1627; G01L 5/226;** G01L 5/162

(86) International application number:
**PCT/IB2022/061714**

(87) International publication number:
**WO 2023/144608 (03.08.2023 Gazette 2023/31)**

(54) **SENSORIZED FINGER FOR A GRIPPER**

**SENSORISIERTER FINGER FÜR EINEN GREIFER**

**DOIGT SENSORIEL DESTINÉ À UNE PINCE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.01.2022 IT 202200001229**

(43) Date of publication of application:
**04.12.2024 Bulletin 2024/49**

(73) Proprietor: **Camozzi Automation S.p.A.**
**20134 Milano (IT)**

(72) Inventors:
• **ROMEO, Rocco Antonio**
**00134 ROMA (IT)**
• **FIORIO, Luca**
**16136 GENOVA (IT)**
• **PARMIGGIANI, Alberto**
**16128 GENOVA (IT)**
• **GESINO, Michele**
**16145 GENOVA (IT)**

• **ROSSI, Marco**
**25064 Gussago, BRESCIA (IT)**

(74) Representative: **Chimini, Francesco et al**
**Jacobacci & Partners S.p.A.**
**Piazza della Vittoria 11**
**25122 Brescia (IT)**

(56) References cited:
EP-A1- 3 588 040    WO-A1-2021/078595
US-A- 3 576 128    US-A- 3 948 093
US-A- 4 132 318    US-A- 4 478 089
US-A- 5 207 554

• **PUBLISHER : HOTTINGER ET AL: "Karl Hoffmann An Introduction to Measurements using Strain Gages", 1 January 1989 (1989-01-01), pages 1 - 255, XP055119007, Retrieved from the Internet <URL:http://www. hbm.com/fileadmin/mediapool/techarticles/ hoffmannbook/Hoffmann-book_EN.pdf> [retrieved on 20140520]**

## Description

<u>Field of the invention</u>

The present invention relates to a sensorized finger for a gripper, in particular for robotic applications.

Grippers suitable for grasping and carrying an object are well known. Grippers generally comprise a gripper body and at least two jaws or gripping fingers, at least one of which is movable with respect to another one between an opening position (which corresponds for example to an inactive position) and a closing position (which corresponds for example to an item gripping position).

<u>Prior art</u>

The first attempts to develop sensorized robotic fingers date back several decades and concern both robotic hands and grippers. For example, in G.A. Bekey et al., "Control Architecture for the Belgrade/USC Hand", In: Dextrous Robot Hands. Springer, New York, NY 1990, a five-finger robotic hand is described that integrates thin sheets of Force Sensing Resistor (FSR). The fingers so equipped could detect forces up to 50 N. However, the solutions proposed over the following years could rarely adapt to scenarios where the gripping force was rather high.

Furthermore, implementing multiple functions simultaneously on a gripping finger was considered too complex and the tendency of the researchers was to focus only on one or more selected features (for example contact point detection or scrolling compensation, etc.).

In L. Birglen and C.M. Gosselin, "Fuzzy Enhanced Control of an Underactuated Finger Using Tactile and Position Sensors, IEEE ICRA 2005" and in J.K. Lee et al., "Development of Direct-printed Tactile Sensors for Gripper Control through Contact and Slip Detection", International Journal of Control, Automation and Systems 2018, for example, bulky robotic fingers were equipped with a tactile sensor. Although slip prevention has also been implemented, the idea of positioning sensors, rather than performing proper integration into the finger structure, somewhat limits the range of forces that may be detected.

Other approaches include the creation of sensing devices in the finger architecture. For example, in H. Kanno et al., "Slip Detection using Robot Fingertip with 6-Axis Force/torque Sensor", IEEE RiiSS 2013, and in T. Zhang et al., "Multifingered Robot hand Dynamic Grasping Control Based on Fingertip Three-axis Tactile Sensor Feedback", IEEE World Congress on Intelligent Control and Automation 2014, multi-axis force sensors were fully embedded in the fingers of robotic hands, obtaining higher theoretical force ranges (up to 50 N). However, notwithstanding the increased robustness and the wider range of gripping force detection, real experiments have rarely been carried out where the load exceeds 10 N. Furthermore, the measured torques are rather low and do not exceed a few hundred mNm.

When designing a robotic finger, more effective sensory data may be obtained by means of distributed tactile sensors. Increasing the density of the sensitive elements clearly leads to richer information, for example regarding the accuracy of movement reconstruction, as shown in R. Dahiya et al., "Directions Toward Effective Utilization of Tactile Skin: A Review", IEEE Sensors 2013. To this end, resistive tactile arrays may be attached to the flat surface of the fingers of a gripper as shown in Cheng et al., "Data Correlation Approach for Slippage Detection in Robotic Manipulations Using Tactile Sensor Array", IEEE/RSJ IROS 2015.

In N. Wettels et al., "Grip Control Using Biomimetic Tactile Sensing Systems", IEEE/ASME Transactions On Mechatronics 2009, a finger incorporates a series of pressure sensors, the measurements of which may provide an estimate of both normal and tangential forces using a Kalman filter. However, even by adding tactile arrays to an artificial finger it remains difficult to measure tangential forces or moments. US 4 478 089 A discloses a sensorized finger for a gripper according to the preamble of claim 1.

An object of the present invention is to propose a sensorized finger for a gripper capable of accurately detecting both the axial loading force and the bending moment over a wide range of forces.

Another object of the invention is to provide a sensorized finger that allows for the integration of several sensors so as to offer high gripper performance but that at the same time has a compact, robust structure and consists of a small number of components.

These purposes are achieved with a sensorized finger for a gripper according to claim 1 and with a gripper according to claim 11.

The dependent claims describe preferred or advantageous embodiments of the sensorized gripper according to the invention.

<u>Summary of the invention</u>

According to a general embodiment, the sensorized finger comprises a base, for example suitable for connection to the body of a gripper, a stem which extends along a stem axis (X) between a proximal end connected to the base and a distal end, and a gripping head which extends from the distal end of the stem and forms a gripping surface which is substantially orthogonal to a force application axis (Z) and is suitable for coming into contact with a piece to be picked up.

The stem forms a first stem surface substantially parallel to the gripping surface and facing in the same direction as the gripping surface, and a second stem surface parallel and opposite to the first stem surface.

The stem is provided with a load cell sensitive to the axial force ($F_Z$) acting on the gripping head along the force application axis (Z) and to the bending moment ($M_Y$) acting along a finger bending axis (Y) orthogonal to the stem axis (X) and to the force application axis (Z). The load cell comprises a first pair of strain gauges positioned on the first stem surface and aligned along the stem axis and a second pair of strain gauges positioned on the second stem surface and aligned along the stem axis.

One of the first and the second pair of strain gauges is connected so as to form a Wheatstone half-bridge; the other one of the first and the second pair of strain gauges is connected so as to form a Wheatstone half-bridge with a diagonal configuration.

This arrangement and configuration of the strain gauges makes it possible to create a two-axis load cell capable of independently detecting the axial force and the bending moment. The decoupling of the measurement with respect to the two axes prevents any measurement errors on one axis, for example due to non-linearity, from propagating to the measurement along the other axis.

In one embodiment, at the axial stem portion on which the two pairs of strain gauges are positioned, the stem is crossed along the direction of the finger bending axis (Y) by a through opening which divides said axial stem portion into two parallel axial half-portions. In particular, the through opening is sized so that each of said two axial half-portions has a thickness along the force application axis (Z) which is at least one order of magnitude less than the thickness of the finger in a connecting portion between the stem and the gripping head, comprised between the through opening and the gripping head.

This particular finger structure makes it possible to obtain in an even more evident way the decoupling effect between the measurement of the axial force along the force application axis (Z) and the measurement of the bending moment along the finger bending axis (Y).

In one embodiment, the through opening has a rocker arm shape, i.e., it has an intermediate portion that is thinner in relation to widened end portions, for example spherical in shape. These end portions are obtained at two respective strain gauges. This configuration of the finger makes it possible to render the thickness of the stem at the strain gauges even thinner than the thickness of the full portion connecting the stem and the gripping head.

In one embodiment, the gripping surface has, at least in the direction along the finger bending axis (Y), a greater extension than the first and second stem surfaces. In other words, the finger takes on a pan or racket shape.

The gripping surface supports a tactile sensor array suitable for providing an indication of the spatial distribution of the axial force on the gripping surface.

The combination of the two-axis load cell and the tactile sensor array makes it possible to obtain the point of application of the gripping force (CoP, center of pressure) with great precision and consequently to detect any slippage of the piece during handling.

In particular, the two-axis load cell makes it possible to obtain, from the detection of the bending moment, the arm of the torque applied to the finger, and therefore the dimension of the point of application along the direction identified by the stem axis (X). The information obtainable from the tactile sensor array makes it possible to derive the dimension of the application point along the direction identified by the finger bending axis (Y).

In one embodiment, the tactile sensors are capacitive sensors.

<u>Brief description of the drawings</u>

Further features and advantages of the sensorized finger according to the invention will become apparent from the following detailed description of the preferred embodiments thereof, given by way of non-limiting example, with reference to the accompanying figures, wherein:

- Figure 1 is a perspective view of the sensorized finger according to the invention;
- Figure 2 is a side view of the finger;
- Figures 3, 3a and 3b are respectively a rear view, a side view and a front view of a sensorized finger, in one embodiment;
- Figure 4 shows an approximation of the load cell geometry using a beam structure model;
- Figure 4a shows a simplified equivalent model of the structure of Figure 4;
- Figures 5 and 5a show the model of the load cell subjected to an axial load, wherein the reactions and diagrams of the axial force and bending moment, respectively, are shown;
- Figures 6 and 6a show the model of the load cell subjected to a bending moment, wherein the reactions and diagrams of the axial force and the bending moment, respectively, are shown;

- Figures 7 and 7a show a Wheatstone half-bridge in two different configurations;
- Figures 8, 8a and 8b show a model of the mechanical structure of the finger to which two pairs of strain gauges are applied, in a resting situation, in the presence of a pure axial load and in the presence of a pure bending moment, respectively;
- Figures 9 and 9a show two perspective views, front and back, of the sensorized finger in one embodiment;
- Figure 10 shows only the electronic boards integrated in the finger; and
- Figures 11 and 11a show the tactile sensor array subjected to a force applied to two different areas of the finger gripping surface.

Detailed description of an exemplary embodiment

The object of the present invention is an intelligent finger, i.e. equipped with sensors, that may be mounted on robotic gripping devices of any kind. The proposed finger is capable of improving the performance of robotic grippers, allowing for more complex behaviors and safer physical interactions. The following is an in-depth description of a practical example of an embodiment of the finger.

The finger according to the invention has been indicated as a whole with 1 in the attached drawings.

The finger 1 comprises a base 10, for example suitable for connection to the body of a gripper, a stem 12 extending along a stem axis (X) between a proximal end 12' connected to the base 10 and a distal end 12", and a gripping head 14 extending from the distal end 12" of the stem 10.

The gripping head 14 has two opposite sides. A first side 16 will be defined as the gripping side as it forms a gripping surface 18 suitable for coming into contact with a piece to be picked up. A second side 20 is opposite to the first side 16 and will also be defined as the outer side 20. The two sides 16, 20 are substantially orthogonal to a force application axis (Z), that is the axis along which the gripper exerts a gripping force to a piece.

The stem 12 forms a first stem surface 12a substantially parallel to the gripping surface 18 and facing in the same direction as the gripping surface, and a second stem surface 12b parallel and opposite to the first stem surface 12a.

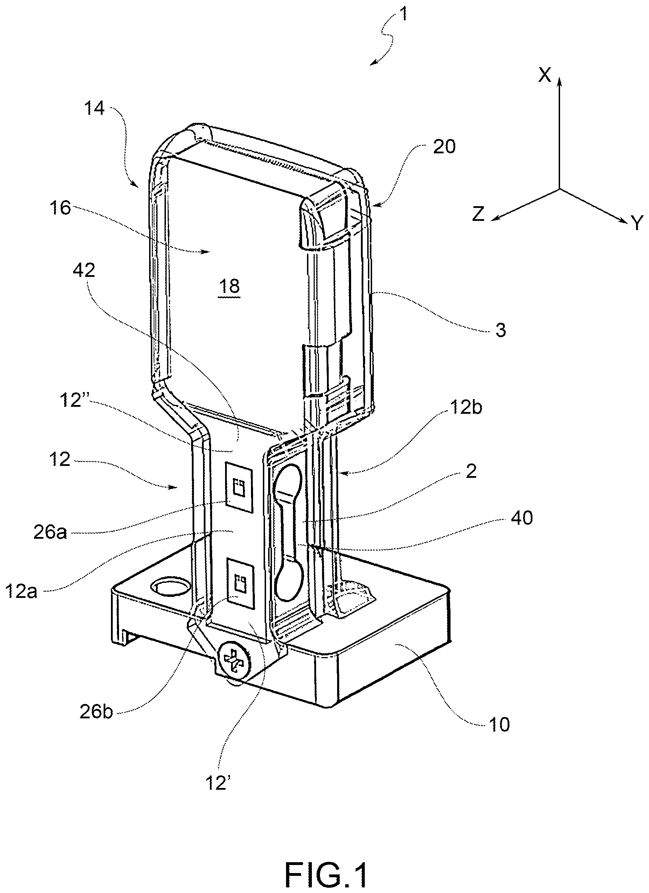

The finger 1 shown in Figure 1 has a metal supporting structure 2 that constitutes the inner core of the finger. The metal supporting structure 2 is protected by an external coating 3, for example made of a plastics material (in the drawings shown as being transparent).

In one embodiment, the gripping head 14 houses, on the gripping side 18, a tactile sensor array 22 that implements an artificial skin. The external side 20, on the other hand, supports an electronic board 24 that comprises devices for the conditioning and processing of the signals from the tactile sensor array 22.

The tactile sensors 22 may be activated by contact with a piece to be picked up.

On the stem 12, on the other hand, strain gauges 26a, 26b, 26c, 26d are positioned that are connected in such a way as to form, as described below, a two-axis load cell. The strain gauges are also activated upon contact with a piece to be picked up.

In the embodiment shown in the drawings, the finger 1 has a flat base 10 that may be equipped with connection means, for example threaded holes, to a gripper body.

As mentioned, the supporting structure 2 has a cover 3, for example made of plastics material, which protects the electronic board 24 and the strain gauges 26a-26d. The tactile sensor array 22, on the other hand, may be covered with a soft fabric cloth.

All of the electrical signals from the sensors are acquired by the aforementioned electronic board 24.

For example, an analog-to-digital converter ("ADC") for the acquisition of the load cell output, a 3-axis accelerometer, a position sensor and integrated circuits that receive signals from the tactile sensor array are mounted on the electronic board 24.

In more detail, the sensorized finger 1 integrates the following sensors:

- four strain gauges 26a-26d, connected so as to act as a bi-axial load cell;
- an array of capacitive tactile sensors 22, for example twenty-three sensors, suitable for mapping the distribution of the normal load acting upon the gripping surface 18;
- a nine-axis IMU that measures the acceleration and orientation of the finger in 3D space.

With reference to the axes shown in Figure 1, the load cell measures the normal load Fz along the direction Z upon the gripping surface and a component of the bending moment My along the direction Y.

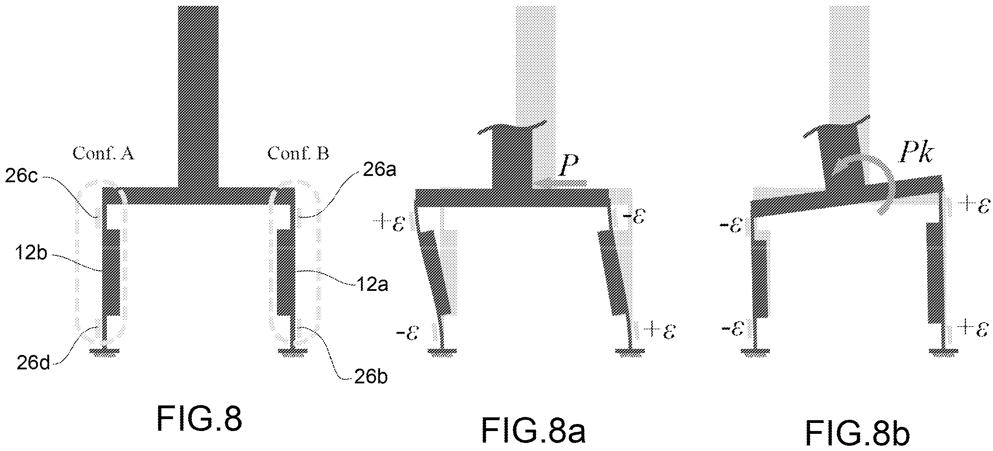

According to one aspect of the invention, the load cell is configured so as to allow for the independent measurement of the force and moment. To this end, the beam structure geometry shown in Figures 8, 8a and 8b, which reflects the supporting structure of the finger, was chosen for the load cell.

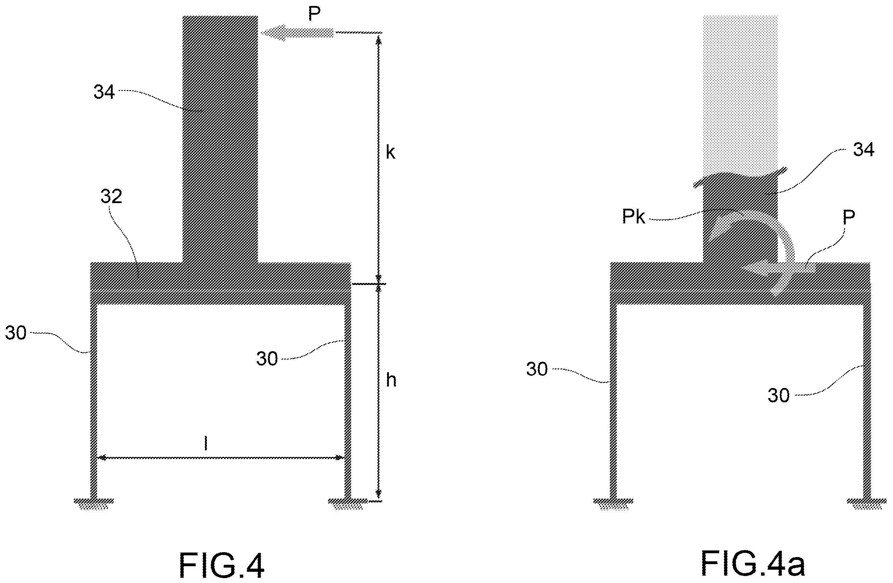

With reference to Figures 4 and 4a, the load cell is shown in schematic form with the following parameters:

- two lower thin vertical portions 30 of height h (which correspond to the opposite surfaces of the finger stem), wherein the mutual distance thereof is *l*;
- a horizontal beam 32 (which corresponds to the connecting portion between the stem and the gripping head), of length *l*;
- a vertical head portion 34 (which corresponds to the gripping head), of height k.

In these figures, P is the axial force acting on the head portion and P*K is the bending moment.

Figure 4a shows the equivalent structure that will be used in the following analyses.

The horizontal beam 32 of the structure has a section of one or more orders of magnitude greater than the two vertical portions 30 of length h; the deformation thereof, of orders of magnitude smaller, is approximated to zero. The constraint forces and load charts of the structure may easily be calculated by exploiting the symmetry of the structure; as a result, the bending points of the deformed configuration occur at the midpoints of all three elements.

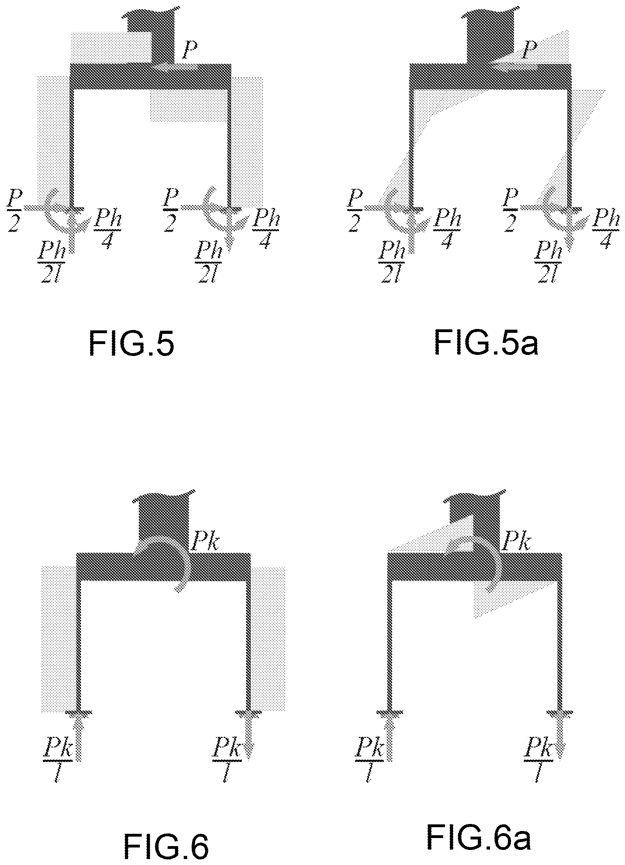

The solutions to the static problem are shown in Figures 5, 5a, 6 and 6a. As is apparent from these figures and the equations that will follow, the load cell thus designed exhibits an interesting decoupled behavior. The shear component is neglected because the impact of the shear stresses is negligible in this type of problem. Therefore, only the effects of the axial force and bending moment components are considered.

Figures 5 and 5a represent the structure subjected to a lateral load P. In particular, Figure 5 shows the reaction components and the axial force diagrams, whilst Figure 5a shows the reaction components and bending moment diagrams.

Figures 6 and 6a show the structure subjected to a bending moment P*K. In particular, Figure 6 shows the reaction components and axial force diagrams, whilst Figure 6a shows the reaction components and bending moment diagrams.

Only the reactions to the bending component of the load (P*k) depend on the height of the load (parameter k), whilst the reactions to the axial component of the load (P) show no dependence upon this parameter. This property may therefore be exploited in order to estimate the applied load as well as the distance thereof from the base of the sensor.

One aspect of the invention involves how to integrate the strain gauges into the structure described above. As it is known, the output from four strain gauges R1-R4, having approximately the same measurement factor R, arranged in a classical Wheatstone bridge is described by the following equation:

$$\mathrm{Vo/Vs} \ = \ 1/4 \ (\Delta \mathrm{R1/R} \ - \ \Delta \mathrm{R2/R} \ + \ \Delta \mathrm{R3/R} \ - \ \Delta \mathrm{R4/R}).$$

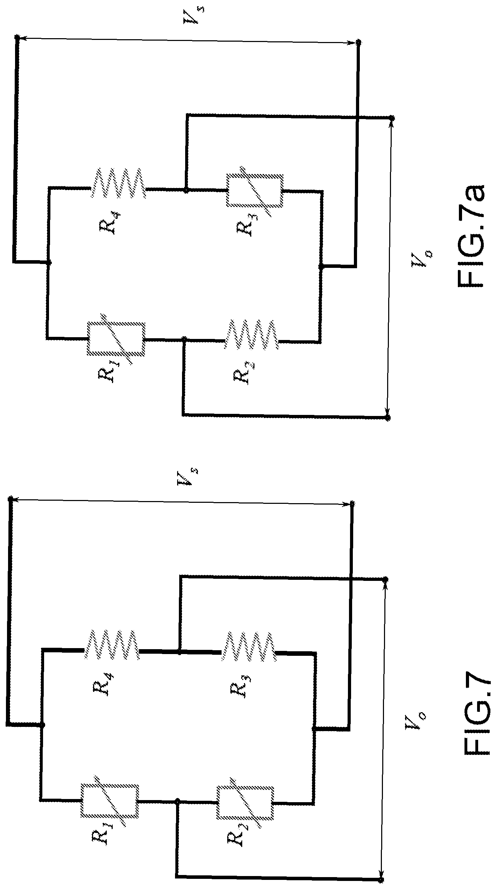

Figures 7 and 7a, on the other hand, show two circuit configurations using two strain gauges: the circuit in Figure 7 is a classic Wheatstone half-bridge, wherein the output is taken from a parallel connection of the two strain gauges R1-R2 and a parallel connection of two resistors R3-R4; the circuit in Figure 7a is a Wheatstone half-bridge in a diagonal configuration, wherein the output is taken from a parallel connection of a first strain gauge R1 and a first resistor R2 and a parallel connection of the second strain gauge R3 and the second resistor R4.

In these two cases the previous equation is simplifies as follows:

For the circuit in Figure 7:

$$\mathrm{Vo/Vs} \ = \ 1/4R \ (\Delta \mathrm{R1} \ - \ \Delta \mathrm{R2});$$

For the circuit in Figure 7a:

$$\mathrm{Vo/Vs} \ = \ 1/4R \ (\Delta \mathrm{R1} \ + \ \Delta \mathrm{R2})$$

The load cell is implemented as described below.

A first pair of strain gauges 26a, 26b is positioned on the first stem surface 12a, with the strain gauges aligned along the stem axis X; the second pair of strain gauges 26c, 26d is positioned on the second stem surface 12b, with the strain gauges aligned along the stem axis.

In particular, the strain gauges 26a, 26b of the first pair are, in relation to the stem axis (X), at the same height as the respective strain gauges of the second pair 26c, 26d.

One of the first and the second pair of strain gauges is connected so as to form a Wheatstone half-bridge (configuration "A", circuit of Figure 7); the other one of the first and the second pair of strain gauges is connected so as to form a Wheatstone half-bridge with a diagonal configuration (configuration "B", circuit of Figure 7a).

Figure 8 shows in schematic form the four strain gauges applied to the structure model described above, in a resting configuration of the structure. Figures 8a and 8b show the strain gauge deformation when the structure is subjected to a pure transverse load P and a pure bending moment P*K, respectively.

In the case of the lateral load with a force P, $\Delta R1 \approx -\Delta R2 = c\varepsilon$ where c is a scale factor and $\varepsilon$ is the deformation.

The half-bridge "A" will then produce the output:

$$\mathrm{Vo/Vs} = 1/4R \; (c\varepsilon + c\varepsilon) = 2c\varepsilon/4R,$$

whilst the half-bridge "B" will produce the output:

$$\mathrm{Vo/Vs} = 1/4R \; (c\varepsilon - c\varepsilon) = 0$$

The inverse condition occurs when the structure is subjected to a bending moment, i.e. $\Delta R1 \approx \Delta R2 = c\varepsilon$.

The half-bridge "A" is therefore sensitive only to the component of the lateral load whilst the half-bridge "B" is sensitive only to the component of the bending moment.

Therefore, the combination of the structure and layout of the described load cell makes it possible to decouple the force measurement and the measurement of the bending moment, and therefore to accurately estimate the position of the contact point as any errors, for example due to nonlinearity, that may affect the measurement along a first axis (for example the force application axis Z), do not propagate to the measurement along the second axis (for example, the finger bending axis Y), or vice versa.

This particular form of construction of the dual-axis load cell makes it possible to meet, for example, the requirements represented by the following operating conditions:

- peak operating load of 125 N;
- peak load of 625 N;
- maximum torque 9 Nm.

The possibility for the gripper to operate even with these load values is one of the main particular features of the proposed sensorized finger. In fact, taking as a reference the application of robotic industrial manipulators field, this makes it possible to ensure flexibility and high performance, combining robustness and precision.

As mentioned above, the sensorized finger 1 is coated with a protective cover 3, still having the object of keeping the design as clean and functional as possible, in particular to: i) maintain the ease of disassembly of the electronic components; ii) ensure easy access to the electronic components and in particular easy cable wiring.

The structural features and configuration of the electronic components of an exemplary embodiment of the sensorized finger according to the invention will be described below.

The stem 12 is the most suitable part for accommodating the load cell, as the dimensions thereof are not negligible when compared to the overall footprint of the sensorized finger. The gripping head 14 in the shape of a paddle determines the gripping surface 18. The shape and size thereof may be chosen not only according to the desired workload, but also the geometric characteristics of the objects to be manipulated. The resulting design is ideal for medium-heavy robotic industrial applications.

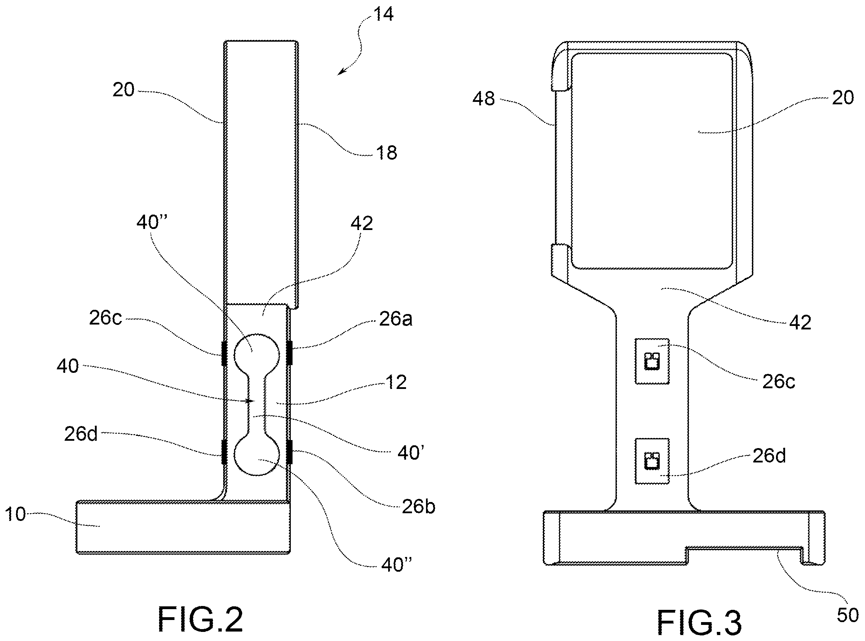

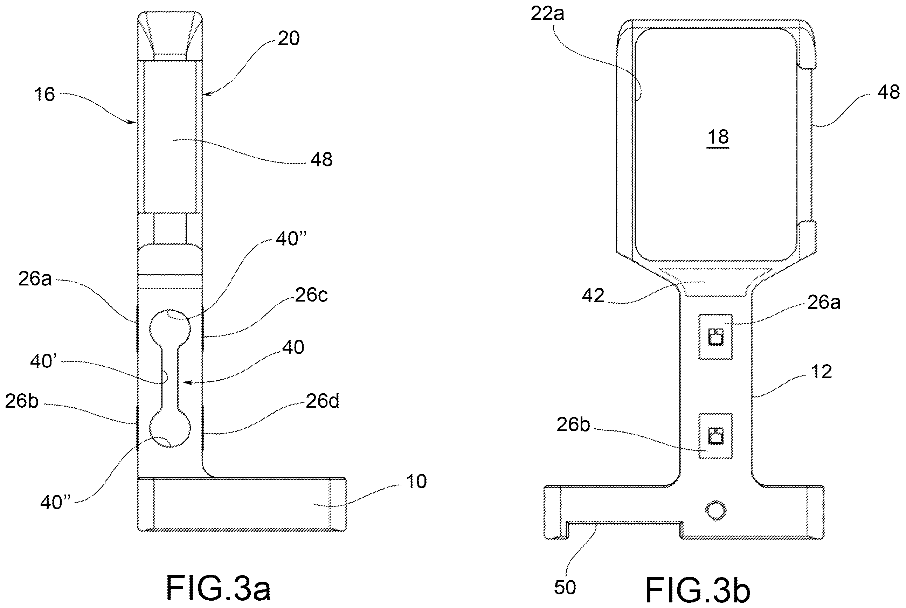

Figures 2, 3, 3a and 3b show views of a sensorized finger according to the invention in one embodiment. As described above, strain gauges 26a-26d are positioned on stem 12, arranged in pairs on the two opposite surfaces 12a, 12b of stem 12, orthogonal to the axis of force application (Z). As described above, the strain gauges of each pair are connected so as to make a Wheatstone semi-bridge.

In one embodiment, the strain gauges may be based upon piezoresistive foil, semiconductor, or other sensing elements.

The stem 12 is crossed, in the direction identified by the finger bending axis (Y), by a through opening 40 in the shape of a rocker arm or bone. The through opening 40 therefore identifies an intermediate portion 40' that is thinner than the widened end portions 40", for example spherical in shape. These end portions 40" are obtained at two respective strain gauges. As explained above, the main function of said through opening 40 is to make the stem section 12, corresponding to the strain gauge pairs 26a-26d, at least one order of magnitude less than the section of the connecting portion 42 between the stem 12 and gripping head 14, above the through opening 40, in such a way as to be able to consider the mechanical structure of the finger with the beam model described above, and consequently to connect the strain gauges in the two configurations, "A" and "B", as a Wheatstone half-bridge.

A good solution for strain gauge positioning is along the sagittal plane of the finger (considering the gripping side as the front side), as this minimizes the influence of the bending moment My along the bending axis (Y), caused by a point of application of the load on the gripping head not being correctly centered.

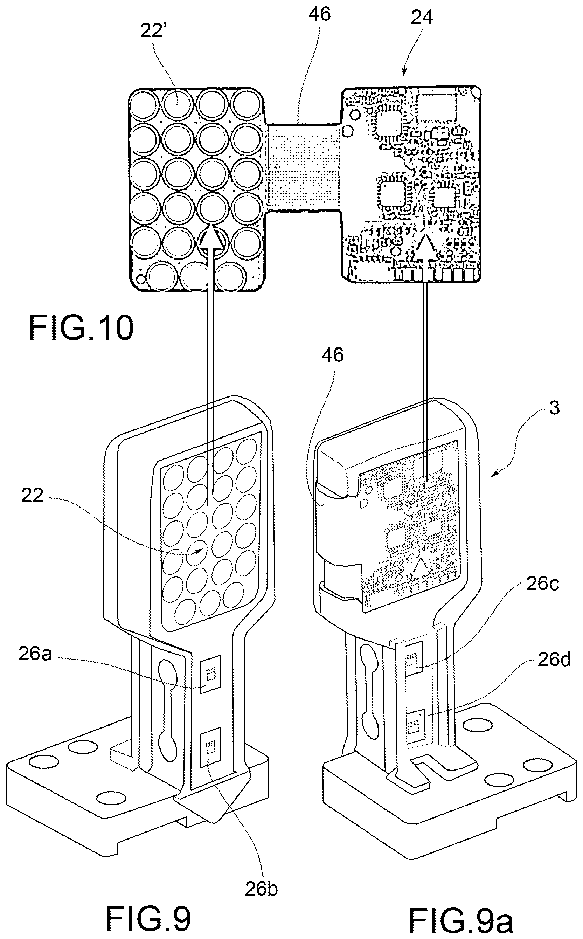

A tactile sensor array 22, that is of pressure and capacitive sensors, is integrated into the gripping side 16 of the gripping head 14. The tactile sensor array 22 is mounted on a dedicated electronic sensor board 22'. The grip region 18 is wider than the width of the stem in order to provide greater tactile capacity. The tactile sensor array 22 is housed within a respective lowered seat 22a in order to improve stability and robustness. In this embodiment, the rear side 20 of the gripping head 14 is exploited to house an additional electronic board 24 that performs the processing of signals acquired by the tactile sensor array (Figures 9, 9a and 10).

As explained above, the tactile sensor array 22 is composed of numerous (e.g. twenty-three) "taxels", i.e. capacitive elements that are sensitive to touch.

These taxels allow the reconstruction of the axial force $F_Z$ applied to the gripping surface. The taxels also make it possible to estimate the Center of Pressure (CoP) during a gripping action, also providing information concerning the exact contact area between the piece and the gripping surface.

It should be noted that the CoP may also be reconstructed by means of the four strain gauges 26a-26d attached to the stem 12. In fact, the strain gauges are connected in such a way as to form a bi-axial load cell capable of detecting the normal load, i.e. normal to the gripping surface, and the bending moment. As explained above, however, by means of only the load cell the coordinate of the CoP may be obtained along the stem axis X (the vertical axis in the drawings); the coordinate along the finger bending axis Y (in the drawings the horizontal axis parallel to the gripping surface) may, on the other hand, be obtained from the tactile sensor array.

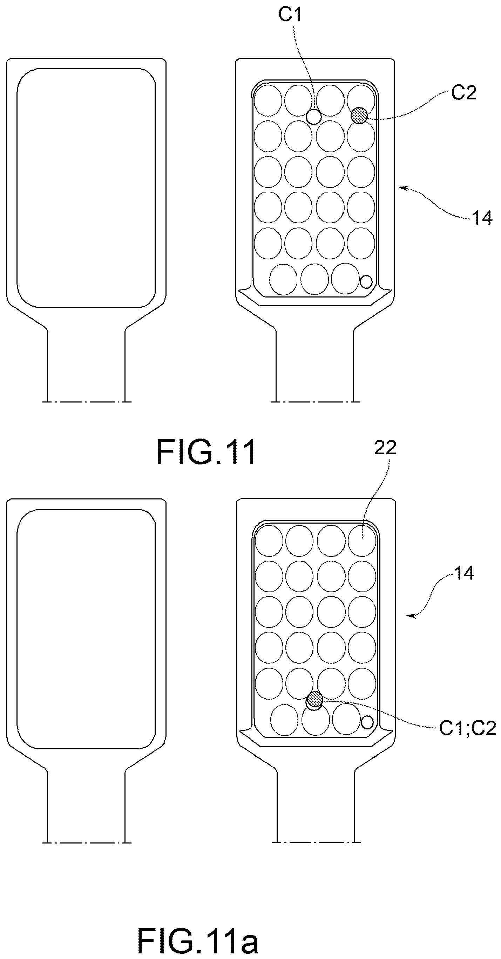

Figures 11 and 11a show a CoP calculation example: the empty circle C1 represents the CoP calculated by the load cell, which then moves along the single vertical direction X depending upon the point of application of the force. The full circle C2 represents the CoP calculated by means of the taxels of the artificial skin, therefore on the X-Y plane. It is clear that the use of both sensors makes it possible to obtain a more robust and precise measurement.

From the analysis of the variation of the CoP the presence of a slip event may also be inferred.

Furthermore, a 9-axis IMU is positioned on top of the back side of the gripping head. This unit provides the 3D orientation of the finger during gripping operations, as well as the 3-D acceleration of the finger. Robust algorithms (for example, Kalman filters) for estimating speed may be used to estimate the speed.

As shown in Figure 10 in particular, the electronic sensor board 22' and the electronic board 24 that comprises the conditioning/processing devices may be connected by means of an intermediate flexible flat cable 46, thus eliminating the need for soldering cables. Said flexible flat cable 46 is bent around the gripping head 14 and is passed through a lowered area 48 of a side wall of the gripping head 14 that connects the gripping side 16 and the rear side 20.

In one embodiment, the electronic components include two CDCs, a Delta-Sigma ADC, and the 9-axis IMU. All of these devices share the same I2C bus.

From the figures it may also be seen that in the base 10 of the finger a recess 50 is obtained for a form-coupled connection to the body of a gripper.

In one embodiment, the material chosen for the metal structure of the finger is 17-4PH stainless steel (tensile strength 1310 MPa, yield strength 0.2% 1130 MPa).

**Claims**

1.    A sensorized finger (1) for a gripper, in particular for robotic applications, comprising:

- a base (10);
- a stem (12) which extends along a stem axis (X) between a proximal end connected to the base and a distal end;
- a gripping head (14) which extends from the distal end of the stem and forms a gripping surface (18) substantially orthogonal to a force application axis (Z) and suitable for coming into contact with a piece to be picked up; wherein the stem forms a first stem surface (12a) substantially parallel to the gripping surface and facing in the same direction as the gripping surface, and a second stem surface (12b) parallel and opposite to the first stem surface, and

wherein the stem is provided with a load cell sensitive to the axial force (Fz) acting on the gripping head along the force application axis (Z) and to the bending moment ($M_Y$) acting along a finger bending axis (Y) orthogonal to the stem axis (X) and to the force application axis (Z), the load cell comprising a first pair of strain gauges (26a, 26b) positioned on the first stem surface and aligned along the stem axis and a second pair of strain gauges (26c, 26d) positioned on the second stem surface and aligned along the stem axis, **characterised in that** one of the first and the second pair of strain gauges being connected so as to form a Wheatstone half-bridge, the other one of the first and the second pair of strain gauges being connected so as to form a Wheatstone half-bridge with a diagonal configuration.

2. Sensorized finger according to claim 1, wherein, at the axial stem portion onto which the two pairs of strain gauges are positioned, the stem is crossed along the direction of the finger bending axis (Y) by a through opening (40) which divides said axial stem portion into twc parallel axial half-portions, the through opening being sized so that each of said two axial half-portions has a thickness along the force application axis (Z) which is at least one order of magnitude less than the thickness of the finger in a connecting portion between the stem and the gripping head, comprised between the through opening and the gripping head.

3. Sensorized finger according to claim 2, wherein the through opening has a rocker arm shape, wherein the widened end portions of the through opening are obtained at two respective strain gauges.

4. Sensorized finger according to any one of the preceding claims, wherein the gripping surface supports a tactile sensor array (22) suitable for providing an indication of the spatial distribution of the axial force on the gripping surface.

5. Sensorized finger according to the preceding claim, wherein the tactile sensors are capacitive sensors.

6. Sensorized finger according to claim 4 or 5, wherein the outer side of the gripping head, opposite to the gripping surface, supports an electronic board (24) operatively connected at least to the tactile sensor array and configured to carry out the conditioning and processing of the signals from the sensor array.

7. Sensorized finger according to claim 6, wherein said electronic board is operatively connected to the load cell and is configured to carry out the conditioning and processing of the signals coming from the load cell.

8. Sensorized finger according to claim 6 or 7, wherein the tactile sensor array is connected to the electronic board by means of a flexible flat cable (46) passing through a side recess obtained in one of the two side walls of the gripping head which connect the gripping surface and the opposite outer side.

9. Sensorized finger according to any one of the preceding claims, further comprising a 9-axis IMU sensor suitable for providing information on the spatial orientation and information on the acceleration of the sensorized finger.

10. Sensorized finger according to claims 6 and 9, wherein the 9-axis IMU sensor is mounted on the electronic board.

11. A gripper, in particular for robotic applications, comprising at least two gripping fingers, at least one of which being movable with respect to another one between a finger opening position and a finger closing position, wherein at least one of said gripping fingers is a sensorized finger according to any one of the preceding claims.

**Patentansprüche**

1. Sensorisierter Finger (1) für einen Greifer, insbesondere für robotische Anwendungen, umfassend:

- eine Basis (10);
- einen Schaft (12), der sich entlang einer Schaftachse (X) zwischen einem proximalen Ende, das mit der Basis verbunden ist, und einem distalen Ende erstreckt;
- einen Greifkopf (14), der sich von dem distalen Ende des Schafts erstreckt und eine Greiffläche (18) bildet, die im Wesentlichen orthogonal zu einer Krafteinwirkungsachse (Z) ist und die geeignet ist, mit einem entnehmenden Werkstück in Kontakt zu kommen;
wobei der Schaft eine erste Schaftfläche (12a) bildet, die sich im Wesentlichen parallel zu der Greiffläche erstreckt und in die gleiche Richtung wie die Greiffläche zugewandt ist, und eine zweite Schaftfläche (12b), die parallel zu der ersten Schaftfläche ist und ihr gegenüberliegt, und
wobei der Schaft mit einer Ladezelle versehen ist, die der Axialkraft ($F_Z$), die auf den Greifkopf entlang der Krafteinwirkungsachse (Z) wirkt, und dem Biegemoment ($M_Y$), das entlang einer Fingerbiegeachse (Y) wirkt, die sich orthogonal zu der Schaftachse (X) und zu der Krafteinwirkungsachse (Z), erstreckt, empfindlich ist,
wobei die Ladezelle ein erstes Paar von Dehnungsmessstreifen (26a, 26b) umfasst, die auf der ersten Schaftfläche positioniert werden und entlang der Schaftachse ausgerichtet sind, und ein zweites Paar von Dehnungsmessstreifen (26c, 26d), die auf der zweiten Schaftfläche positioniert werden und entlang der Schaftachse ausgerichtet sind, **dadurch gekennzeichnet, dass** eines der ersten und zweiten Paare von Dehnungsmessstreifen verbunden ist, sodass eine Wheatstone Halbbrücke gebildet wird, wobei das andere der ersten und zweiten Paare von Dehnungsmessstreifen verbunden ist, sodass eine Wheatstone-Halbbrücke mit einer diagonalen Konfiguration gebildet wird.

2. Sensorisierter Finger nach Anspruch 1, wobei in dem axialen Schaftabschnitt, auf dem die zwei Paare von Dehnungsmessstreifen positioniert werden, der Schaft entlang der Fingerbiegeachse (Y) von einer Durchgangsöffnung (40) durchquert wird, die den axialen Schaftabschnitt in zwei parallele axiale Halbbereiche unterteilt, wobei die Durchgangsöffnung dimensioniert ist, sodass jeder dieser zwei axialen Halbbereiche eine Dicke entlang der Krafteinwirkungsachse (Z) aufweist, die mindestens eine Größenordnung als die Dicke des Fingers in einem Verbindungsabschnitt zwischen dem Schaft und dem Greifkopf kleiner ist, der zwischen der Durchgangsöffnung und dem Greifkopf enthalten ist.

3. Sensorisierter Finger nach Anspruch 2, wobei die Durchgangsöffnung eine kipphebelförmige Gestalt aufweist, wobei die verbreiterten Endbereiche der Durchgangsöffnung jeweils an zwei entsprechenden Dehnungsmessstreifen erhalten werden.

4. Sensorisierter Finger nach einem der vorhergehenden Ansprüche, wobei die Greiffläche eine taktile Sensoranordnung (22) trägt, das geeignet ist, eine Anzeige der räumlichen Verteilung der Axialkraft auf der Greiffläche bereitzustellen.

5. Sensorisierter Finger nach dem vorhergehenden Anspruch, wobei die taktilen Sensoren kapazitive Sensoren sind.

6. Sensorisierter Finger nach Anspruch 4 oder 5, wobei die Außenseite des Greifkopfs, die der Greiffläche gegenüberliegt, eine elektronische Platine (24) trägt, die operativ mindestens mit der taktilen Sensoranordnung verbunden ist und dazu konfiguriert ist, die Konditionierung und Verarbeitung der Signale aus der Sensoranordnung durchzuführen.

7. Sensorisierter Finger nach Anspruch 6, wobei die elektronische Platine operativ mit der Ladezelle verbunden ist und dazu konfiguriert ist, die Konditionierung und Verarbeitung der Signale, die von der Ladezelle kommen, durchzuführen.

8. Sensorisierter Finger nach Anspruch 6 oder 7, wobei die taktile Sensoranordnung mit der elektronischen Platine mittels eines flexiblen Flachkabels (46) verbunden ist, das durch eine seitliche Ausnehmung verläuft, die in einer der beiden Seitenwände des Greifkopfs erhalten wird, die die Greiffläche mit der gegenüberliegenden Außenseite verbinden.

9. Sensorisierter Finger nach einem der vorhergehenden Ansprüche, ferner umfassend einen 9-Achsen-IMU-Sensor, der geeignet ist, Informationen über die räumliche Orientierung und Informationen über die Beschleunigung des sensorisierten Fingers bereitzustellen.

10. Sensorisierter Finger nach den Ansprüchen 6 und 9, wobei der 9-Achsen-IMU-Sensor auf der elektronischen Platine eingebaut wird.

11. Greifer, insbesondere für robotische Anwendungen, umfassend mindestens zwei Greiffinger, von denen mindestens einer zwischen einer Fingeröffnungsposition und einer Fingerschließposition in Bezug auf den anderen beweglich ist, wobei mindestens einer der Greiffinger ein sensorisierter Finger nach einem der vorhergehenden Ansprüche ist.

**Revendications**

1. Doigt sensoriel (1) pour une pince, en particulier pour des applications robotiques, comprenant :

   - une base (10) ;
   - une tige (12) qui s'étend le long d'un axe de tige (X) entre une extrémité proximale reliée à la base et une extrémité distale ;
   - une tête de préhension (14) qui s'étend depuis l'extrémité distale de la tige et forme une surface de préhension (18) sensiblement orthogonale à un axe d'application de la force (Z) et adaptée à entrer en contact avec une pièce à saisir ;

dans lequel la tige forme une première surface de tige (12a) sensiblement parallèle à la surface de préhension et orientée dans la même direction que la surface de préhension, et une seconde surface de tige (12b) parallèle et opposée à la première surface de tige, et

dans lequel la tige est pourvue d'une cellule de charge sensible à la force axiale ($F_Z$) agissant sur la tête de préhension le long de l'axe d'application de la force (Z) et au moment de flexion ($M_Y$) agissant selon un axe de flexion du doigt (Y) orthogonal à l'axe de tige (X) et à l'axe d'application de la force (Z),

la cellule de charge comprenant une première paire de jauges de contrainte (26a, 26b) positionnées sur la première surface de tige et alignées le long de l'axe de tige, et une seconde paire de jauges de contrainte (26c, 26d) positionnées sur la seconde surface de tige et alignées le long de l'axe de tige, **caractérisé en ce que** l'une des première et seconde paires de jauges de contrainte est connectée de manière à former un demi-pont de Wheatstone, l'autre des première et seconde paires de jauges de contrainte étant connectée de manière à former un demi-pont de Wheatstone avec une configuration diagonale.

2. Doigt sensoriel selon la revendication 1, dans lequel, au niveau de la portion axiale de tige sur laquelle sont positionnées les deux paires de jauges de contrainte, la tige est traversée selon l'axe de flexion du doigt (Y) par une ouverture traversante (40) qui divise ladite portion axiale de tige en deux demi-portions axiales parallèles, l'ouverture traversante étant dimensionnée de sorte que chacune desdites deux demi-portions axiales présente une épaisseur selon l'axe d'application de la force (Z) qui est d'au moins un ordre de grandeur inférieure à l'épaisseur du doigt dans une portion de liaison entre la tige et la tête de préhension, comprise entre l'ouverture traversante et la tête de préhension.

3. Doigt sensoriel selon la revendication 2, dans lequel l'ouverture traversante présente une forme de levier oscillant, dans lequel les extrémités élargies de l'ouverture traversante sont obtenues au niveau de deux jauges de contrainte respectives.

4. Doigt sensoriel selon l'une quelconque des revendications précédentes, dans lequel la surface de préhension supporte un réseau de capteurs tactiles (22) adapté à fournir une indication de la distribution spatiale de la force axiale sur la surface de préhension.

5. Doigt sensoriel selon la revendication précédente, dans lequel les capteurs tactiles sont des capteurs capacitifs.

6. Doigt sensoriel selon la revendication 4 ou 5, dans lequel le côté extérieur de la tête de préhension, opposé à la surface de préhension, supporte une carte électronique (24) connectée fonctionnellement au moins au réseau de capteurs tactiles et configurée pour effectuer le conditionnement et le traitement des signaux issus du réseau de capteurs.

7. Doigt sensoriel selon la revendication 6, dans lequel ladite carte électronique est connectée fonctionnellement à la cellule de charge et est configurée pour effectuer le conditionnement et le traitement des signaux issus de la cellule de charge.

8. Doigt sensoriel selon la revendication 6 ou 7, dans lequel le réseau de capteurs tactiles est connecté à la carte électronique au moyen d'un câble plat flexible (46) passant à travers un évidement latéral obtenu dans l'un des deux murs latéraux de la tête de préhension reliant la surface de préhension et le côté extérieur opposé.

9. Doigt sensoriel selon l'une quelconque des revendications précédentes, comprenant en outre un capteur IMU à 9 axes adapté à fournir des informations sur l'orientation spatiale et des informations sur l'accélération du doigt sensoriel.

10. Doigt sensoriel selon les revendications 6 et 9, dans lequel le capteur IMU à 9 axes est monté sur la carte électronique.

11. Pince, en particulier pour des applications robotiques, comprenant au moins deux doigts de préhension, dont au moins un est mobile par rapport à un autre entre une position d'ouverture du doigt et une position de fermeture du doigt, dans lequel au moins un desdits doigts de préhension est un doigt sensoriel selon l'une quelconque des revendications précédentes.

FIG.1

FIG.2

FIG.3

EP 4 469 248 B1

FIG.3a

FIG.3b

EP 4 469 248 B1

FIG.4

FIG.4a

FIG.5

FIG.5a

FIG.6

FIG.6a

EP 4 469 248 B1

FIG.7

FIG.7a

Conf. A          Conf. B

26c                        26a

12b                        12a

26d                        26b

# FIG.8

$P$

$+\varepsilon$          $-\varepsilon$

$-\varepsilon$          $+\varepsilon$

# FIG.8a

$Pk$

$-\varepsilon$          $+\varepsilon$

$-\varepsilon$          $+\varepsilon$

# FIG.8b

EP 4 469 248 B1

FIG.10

FIG.9

FIG.9a

FIG.11

FIG.11a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4478089 A

**Non-patent literature cited in the description**

- Control Architecture for the Belgrade/USC Hand. **G.A. BEKEY et al.** Dextrous Robot Hands. Springer, 1990
- **L. BIRGLEN** ; **C.M. GOSSELIN**. *Fuzzy Enhanced Control of an Underactuated Finger Using Tactile and Position Sensors, IEEE ICRA 2005*
- **J.K. LEE et al.** Development of Direct-printed Tactile Sensors for Gripper Control through Contact and Slip Detection. *International Journal of Control, Automation and Systems*, 2018
- **KANNO et al.** Slip Detection using Robot Fingertip with 6-Axis Force/torque Sensor. *IEEE RiiSS*, 2013
- **T. ZHANG et al.** Multifingered Robot hand Dynamic Grasping Control Based on Fingertip Three-axis Tactile Sensor Feedback. *IEEE World Congress on Intelligent Control and Automation*, 2014
- **R. DAHIYA et al.** Directions Toward Effective Utilization of Tactile Skin: A Review. *IEEE Sensors*, 2013
- **CHENG et al.** Data Correlation Approach for Slippage Detection in Robotic Manipulations Using Tactile Sensor Array. *IEEE/RSJ IROS*, 2015
- **N. WETTELS et al.** Grip Control Using Biomimetic Tactile Sensing Systems. *IEEE/ASME Transactions On Mechatronics*, 2009